# EUROPÄISCHE PATENTSCHRIFT

(11) **EP 1 159 770 B1**
(45) Veröffentlichungstag und Bekanntmachung des Hinweises auf die Patenterteilung: **04.09.2002**
(21) Anmeldenummer: 00912393.6
(22) Anmeldetag: 28.02.2000
(51) Int. Cl.: H01M 8/04, H01M 8/02

(54) **VERFAHREN ZUM BETREIBEN EINER BRENNSTOFFZELLENANLAGE UND BRENNSTOFFZELLENANLAGE**
METHOD FOR OPERATING A FUEL CELL FACILITY AND CORRESPONDING FUEL CELL FACILITY
PROCEDE POUR FAIRE FONCTIONNER UNE INSTALLATION A PILES A COMBUSTIBLE ET INSTALLATION A PILES A COMBUSTIBLE

(30) Priorität: 10.03.1999 DE 19910695
(43) Veröffentlichungstag der Anmeldung: 05.12.2001
(73) Patentinhaber: SIEMENS AKTIENGESELLSCHAFT, 80333 München (DE)
(72) Erfinder: BETTE, Willi, D-91056 Erlangen (DE); MERKEL, Christian, D-44137 Dortmund (DE)
(86) Internationale Anmeldenummer: DE0000566
(87) Internationale Veröffentlichungsnummer: WO00054354

(56) Entgegenhaltungen:
- WO-A-98/04011
- US-A- 5 647 534
- PATENT ABSTRACTS OF JAPAN vol. 1995, no. 03, 28. April 1995 (1995-04-28) & JP 06 333583 A (FUJI ELECTRIC CO LTD), 2. Dezember 1994 (1994-12-02)

## Beschreibung

Die Erfindung bezieht sich auf ein Verfahren zum Betreiben einer Brennstoffzellenanlage und auf eine Brennstoffzellenanlage.

Es ist bekannt, daß bei der Elektrolyse von Wasser die Wassermoleküle durch elektrischen Strom in Wasserstoff (H₂) und Sauerstoff (O₂) zerlegt werden. In einer Brennstoffzelle läuft dieser Vorgang in umgekehrter Richtung ab. Durch eine elektrochemische Verbindung von Wasserstoff und Sauerstoff zu Wasser entsteht elektrischer Strom mit hohem Wirkungsgrad und, wenn als Brenngas reiner Wasserstoff eingesetzt wird, ohne Emission von Schadstoffen und Kohlendioxid (CO₂). Auch mit einem technischen Brenngas, beispielsweise Erdgas oder Kohlegas und mit Luft anstelle von reinem Sauerstoff, wobei die Luft zusätzlich mit Sauerstoff angereichert sein kann, erzeugt eine Brennstoffzelle deutlich weniger Schadstoffe und weniger Kohlendioxid als andere Energieerzeuger, die mit fossilen Energieträgern arbeiten.

Die technische Umsetzung des Prinzips der Brennstoffzelle hat zu unterschiedlichen Lösungen und zwar mit verschiedenartigen Elektrolyten und mit Betriebstemperaturen zwischen 80°C und 1000°C geführt. In Abhängigkeit von ihrer Betriebstemperatur werden die Brennstoffzellen in Nieder-, Mittel- und Hochtemperatur-Brennstoffzellen eingeteilt, die sich wiederum durch verschiedene technische Ausführungsformen voneinander unterscheiden.

Eine Brennstoffzelle alleine liefert eine Betriebsspannung von unter einem Volt. Daher werden eine Vielzahl von Brennstoffzellen aufeinander gestapelt und zu einem Brennstoffzellenblock zusammengefaßt. In der Fachliteratur wird ein solcher Block auch "Stack" genannt. Durch das In-Reihe-Schalten der Brennstoffzellen des Brennstoffzellenblocks kann die Betriebsspannung einer Brennstoffzellenanlage einige 100 Volt betragen.

Eine oder mehrere Brennstoffzellen sind für sich alleine nicht betreibbar. Sie werden daher in einer Brennstoffzellenanlage betrieben, die einen Brennstoffzellenblock, einen Betriebsteil und eine Anlagenelektronik umfaßt. Der Betriebsteil umfaßt Einrichtungen für die Versorgung der Brennstoffzellen mit Betriebsgasen, also mit Sauerstoff - oder Luft - und Brenngas. Ferner umfaßt der Betriebsteil Einrichtungen für die Produktwasserabfuhr, für die Wärmeabfuhr, und die Ableitung des in den Brennstoffzellen erzeugten elektrischen Stroms. Die Anlagenelektronik steuert das Zusammenspiel der verschiedenen Einrichtungen der Brennstoffzellenanlage.

Eine Brennstoffzellenanlage arbeitet dann besonders effektiv und kostengünstig, wenn ihr Gesamtwirkungsgrad hoch ist. Der Gesamtwirkungsgrad einer Brennstoffzellenanlage setzt sich additiv aus dem elektrischen und dem thermischen Wirkungsgrad der Anlage zusammen. Der elektrische und thermische Wirkungsgrad ergibt sich aus der pro Menge Brennstoff erzeugten und nutzbaren elektrischen bzw. thermischen Energie. Um einen besonders effektiven Betrieb der Brennstoffzellenanlage zu erreichen, ist es anzustreben, möglichst viel der erzeugten elektrischen und thermischen Energie nutzbar zu machen.

Beim Betrieb einer Brennstoffzellenanlage entsteht viel thermische Energie, also viel Wärme. Der weitaus größte Teil der Wärme wird im Brennstoffzellenblock erzeugt. Ein Teil dieser Wärme wird durch einen Kühlwasserkreislauf vom Brehnstoffzellenbiock abgeführt. Um diese Wärme nutzbar zu machen wird der Kühlwasserkreislauf beispielsweise thermisch mit einem Heizwasserkreislauf verbunden, der die Wärme des Kühlwassers aufnimmt. Das Wasser des Heizwasserkreislaufs wird beispielsweise durch Heizungen eines Hauses geleitet und wärmt somit das Haus. Ein Teil der vom Brennstoffzellenblock erzeugten Wärme verläßt den Block jedoch als Strahlungswärme. Sie wird in den Raum abgestrahlt, in dem die Brennstoffzellenanlage aufgebaut ist. Bei einer herkömmlichen Brennstoffzellenanlage wird diese Strahlungswärme nicht genutzt.

Der Brennstoffzellenblock ist die Komponenten einer Brennstoffzellenanlage, die am meisten Wärme abstrahlt. Aber auch andere Komponenten der Brennstoffzellenanlage, beispielsweise eine Umwälzpumpe, ein Luftverdichter oder Bauteile der Anlagenelektronik, strahlen zusammen in erheblichem Umfang Wärme in die Umgebung ab. Auch diese Strahlungswärme wird von einer herkömmlichen Brennstoffzellenanlage nicht genutzt.

Der Erfindung liegt die Aufgabe zugrunde, ein Verfahren zum Betreiben einer Brennstoffzellenanlage anzugeben, bei dem von Komponenten der Brennstoffzellenanlage abgestrahlte Wärme nutzbar gemacht wird. Der Erfindung liegt ferner die Aufgabe zugrunde, eine Brennstoffzellenanlage anzugeben, die es ermöglicht, von Komponenten der Brennstoffzellenanlage abgestrahlte Wärme nutzbar zu machen.

Die erstgenannte Aufgabe wird von einem Verfahren zum Betreiben einer Brennstoffzellenanlage gelöst, die einen Brennstoffzellenblock, einen Kühlwasserkreislauf und ein Gehäuse, das Wärme abstrahlende Komponenten der Brennstoffzellenanlage umgibt, umfaßt, bei dem erfindungsgemäß Luft für den Betrieb der Brennstoffzellen des Brennstoffzellenblocks in das Gehäuse geleitet wird, die Luft im Gehäuse befindliche Komponenten der Brennstoffzellenanlage umströmt und anschließend von einem Luftverdichter dem Brennstoffzellenblock zugeführt wird, und bei dem der Brennstoffzellenblock Wärme an das Kühlwasser des Kühlwasserkreislaufs abgibt und Wärme des Kühlwassers Wasser eines Heizwasserkreislaufs erwärmt.

In einem ersten Schritt geht die Erfindung von der Überlegung aus, daß von Komponenten der Brennstoffzellenanlage abgestrahlte Wärme nutzbar gemacht wird, indem sie einem Heizwasserkreislauf zugeführt wird.

Dies kann dadurch erreicht werden, daß Wärme abstrahlende Komponenten der Brennstoffzellenanlage wärmeisoliert und wassergekühlt werden. Diese Maßnahme unterbindet weitgehend die Abstrahlung der Wärmeenergie der isolierten Komponenten in die Umgebung und führt dazu, daß die Wärme durch den Kühlwasserkreislauf abgeführt wird und anschließend einem Heizwasserkreislauf übertragen werden kann. Diese Maßnahme ist jedoch sehr aufwendig.

In einem zweiten Schritt geht die Erfindung von der Überlegung aus, daß Luft den Brennstoffzellen als Betriebsgas zugeführt wird. Diese Luft wird im Brennstoffzellenblock auf die Temperatur des Brennstoffzellenblocks erwärmt, wodurch dem Brennstoffzellenblock Wärme entzogen wird. Außerdem geht die Erfindung von der Überlegung aus, daß Wärme abstrahlende Komponenten der Brennstoffzellenanlage die sie umgebende Luft erwärmen. Bei Verwendung dieser vorgewärmten Luft als Betriebsgas der Brennstoffzellen wird dem Brennstoffzellenblock beim Heizen der Luft auf die Betriebstemperatur der Brennstoffzellen weniger Energie entzogen. Dadurch gibt der Brennstoffzellenblock mehr Wärme an das Kühlwasser ab, das diese Wärme dem Wasser des Heizkreislaufs überträgt.

In einem dritten Schritt geht die Erfindung von der Überlegung aus, daß ein Gehäuse, das die Wärme abstrahlenden Komponenten der Brennstoffzellenanlage umgibt, die Dissipation der warmen Luft in die Umgebung der Anlage verhindert. In dieses Gehäuse wird Luft aus der Umgebung des Gehäuses geleitet. Dies geschieht beispielsweise dadurch, daß ein Luftverdichter im Inneren des Gehäuses Luft ansaugt, wodurch Luft durch eine Öffnung des Gehäuses in das Innere des Gehäuses nachströmt. Diese nachströmende Luft umfließt die Wärme abstrahlenden Komponenten der Brennstoffzellenanlage, wird von ihnen erwärmt, von dem Verdichter angesaugt und dem Brennstoffzellenblock zugeführt.

Durch dieses Verfahren wird von Komponenten der Brennstoffzellenanlage abgestrahlte Wärmeenergie dem Brennstoffzellenblock zugeführt, von dem sie mittels des Kühlwassers auf das Wasser des Heizkreislaufs übertragen wird. Die abgestrahlte Wärme wird somit nutzbar gemacht.

In vorteilhafter Ausgestaltung der Erfindung wird die Luft, bevor sie dem Brennstoffzellenblock zugeführt wird, in einem Flüssigkeitsringverdichter verdichtet. Hierdurch wird die Luft nicht nur auf eine vorgegebene Dichte verdichtet, was sich vorteilhaft auf den Betrieb der Brennstoffzellenanlage auswirkt, sondern auch gleichzeitig befeuchtet. Durch diese Befeuchtung wird eine erhebliche Verlängerung der Lebensdauer von Elektrolytmembranen erreicht, wie sie beispielsweise in sogenannten PEM-Brennstoffzellen (Polymer Electrolyte Membrane) eingesetzt werden.

Zweckmäßigerweise wird Kühlwasser aus dem Kühlwasserkreislauf in den Flüssigkeitsringverdichter geleitet. Dies hat den Vorteil, daß die Luft im Flüssigkeitsringverdichter auf die Temperatur des Kühlwassers, also annähernd die Betriebstemperatur der Brennstoffzellen erwärmt wird bevor sie dem Brennstoffzellenblock zugeführt wird. Außerdem wird die Luft mit dem sehr reinen Kühlwasser befeuchtet, was sich vorteilhaft für den Betrieb der Brennstoffzellenanlage auswirkt.

Die zweitgenannte Aufgabe wird von einer Brennstoffzellenanlage gelöst, die erfindungsgemäß einen Brennstoffzellenblock, einen Luftverdichter, einen Kühlwasserkreislauf, der mit einem Heizwasserkreislauf thermisch verbunden ist, und ein Gehäuse, das Wärme abstrahlende Komponenten der Brennstoffzellenanlage umgibt, umfaßt, wobei der Luftverdichter eine Ansaugöffnung aufweist, die sich im Inneren des Gehäuses befindet und durch die Luft aus dem Inneren des Gehäuses in den Luftverdichter einleitbar ist, und wobei das Gehäuse eine Öffnung aufweist, durch die das Gehäuse umgebende Luft in das Innere des Gehäuses einleitbar ist.

Eine solche Brennstoffzellenanlage ermöglicht es auf die oben beschriebene Art und Weise, die von Komponenten der Brennstoffzellenanlage abgestrahlte Wärme nutzbar zu machen. Dabei ist der thermische Wirkungsgrad der Brennstoffzellenanlage um so größer, je mehr Wärme abstrahlende Komponenten von dem Gehäuse umgeben sind. Umschließt das Gehäuse die gesamte Brennstoffzellenanlage, kann sie gleichzeitig als Schallschutz und als Schrank für die Anlage dienen. Dabei können Bedienelemente, Anzeigeelemente oder ein Bildschirm als Bestandteile des Gehäuses fungieren.

Die thermische Verbindung zwischen dem Kühlwasser- und dem Heizwasserkreislauf ist beispielsweise durch einen Wärmetauscher hergestellt, mit dessen Hilfe Wärme des Kühlwassers auf Wasser des Heizkreislaufes übertragen wird.

In zweckmäßiger Ausgestaltung der Erfindung ist das Gehäuse thermisch isoliert. Hierdurch wird weitgehend vermieden, daß die im Gehäuse befindliche warme Luft die Außenwand des Gehäuses erwärmt und das Gehäuse selber Wärme in die Umgebung abstrahlt.

Vorteilhafterweise ist das Gehäuse als ein doppelwandiges Gehäuse ausgestaltet. Auch bei dieser Ausgestaltung des Gehäuses wird weitgehend vermieden, daß die im Gehäuse befindliche warme Luft die Außenwand des Gehäuses erwärmt und das Gehäuse selber Wärme in die Umgebung abstrahlt.

Zweckmäßigerweise ist der Luftverdichter ein Flüssigkeitsringverdichter. Durch diese Ausgestaltung der Erfindung wird die Luft, bevor sie den Brennstoffzellen zugeführt wird, befeuchtet, ohne daß dafür ein weiteres Bauteil der Brennstoffzellenanlage hinzugefügt werden muß.

In weiterer vorteilhafter Ausgestaltung der Erfindung umfaßt der Brennstoffzellenblock PEM-Brennstoffzellen. PEM-Brennstoffzellen werden bei einer niedrigen Betriebstemperatur von etwa 80°C betrieben, weisen ein günstiges Überlastverhalten und eine hohe Lebensdauer auf. Außerdem zeigen sie ein günstiges Verhalten bei schnellen Lastwechseln und sind mit Luft anstelle von reinem Sauerstoff betreibbar. Alle diese Eigenschaften machen PEM-Brennstoffzellen besonders geeignet für eine Anwendung im mobilen Bereich, wie beispielsweise für den Antrieb von Fahrzeuge verschiedenster Art.

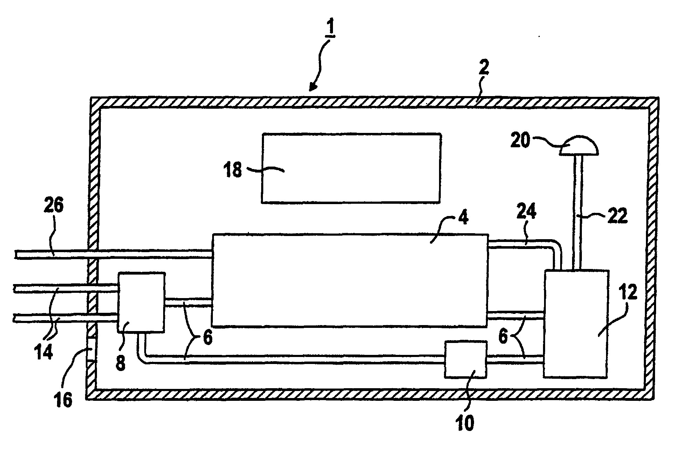

Ein Ausführungsbeispiel der Erfindung ist anhand einer Figur erläutert. Die Figur zeigt in einer sehr stark vereinfachten Darstellung eine Brennstoffzellenanlage 1. Ein thermisch isoliertes Gehäuse 2 umgibt sämtliche weitere Komponenten der Brennstoffzellenanlage 1. Im Gehäuse 2 ist ein Brennstoffzellenblock 4 angeordnet, der 80 PEM-Brennstoffzellen umfaßt. Der Brennstoffzellenblock 4 wird von Wasser eines Kühlkreislaufes 6 gekühlt, das vom Brennstoffzellenblock 4 zu einem Wärmetauscher 8 fließt, von dort zu einer Umwälzpumpe 10, weiter zu einem Flüssigkeitsringverdichter und zurück in den Brennstoffzellenblock 4. Das Kühlwasser gibt im Wärmetauscher 8 Wärme an Wasser eines Heizwasserkreislaufs 14 ab. Das Wasser des Heizwasserkreislaufs 14 erwärmt Heizungen eines Wohnhauses.

Die PEM-Brennstoffzellen werden mit den Betriebsgasen Luft und Wasserstoff betrieben. Etwa 20°C warme Luft aus der Umgebung der Brennstoffzellenanlage 1 wird - hervorgerufen durch einen vom Flüssigkeitsringverdichter 12 erzeugten leichten Unterdruck im Inneren des Gehäuses - durch eine Öffnung 16 des Gehäuses 2 in das Innere des Gehäuses 2 geleitet. Die Luft umströmt dort Wärme abgebende Komponenten der Brennstoffzellenanlage 1, wie beispielsweise den Wärmetauscher 8, den Brennstoffzellenblock 4, eine elektronische Anlagensteuerung 18, die Umwälzpumpe 10 und den Flüssigkeitsringverdichter 12. Dabei heizt sie sich auf etwa 40°C auf. Anschließend wird sie durch eine Ansaugöffnung 20 angesaugt und strömt durch ein Ansaugrohr 22 in den Flüssigkeitsringverdichter 12. Dort wird die Luft verdichtet und mit dem Kühlwasser auf 100% Luftfeuchte befeuchtet. Das etwa 75° warme Kühlwasser heizt die Luft im Flüssigkeitsringverdichter 12 auf etwa 75°C auf. Verdichtet, befeuchtet und aufgeheizt wird die Luft nun durch die Luftzuleitung 24 dem Brennstoffzellenblock 4 zugeführt. Nach dem Durchströmen des Brennstoffzellenblocks 4 wird sie durch die Abluftleitung 26 aus dem Brennstoffzellenblock 4 herausgeleitet. Weitere, zum Teil auch Wärme abstrahlende Bauteile der Brennstoffzellenaniage 1 wie beispielsweise Wärmetauscher im Luftabweg, Brenngaszu- und abweg, Wasserabscheider und Pumpen sind der Übersichtlichkeit halber in der Figur nicht dargestellt.

Die durch das Gehäuse 2 der Brennstoffzellenanlage 1 strömende Luft umströmt alle Wärme abstrahlenden Komponenten der Brennstoffzellenanlage 1, auch Rohre und Anschlüsse, und führt Wärme von den Komponenten ab. Die Wärme wird von der Luft dem Brennstoffzellenblock 4 zugeführt und somit nutzbar gemacht. Aus dem Inneren des wärmeisolierten Gehäuses 2 dringt Wärme auf diese Weise nur in unwesentlichem Umfang durch das Gehäuse 2 nach außen hindurch. Durch diese Luftführung ist es nicht mehr nötig, einzelne Komponenten der Brennstoffzellenanlage 1 zu isolieren, um Wärmeabstrahlung zu verhindern. Daher wird die Herstellung einer Brennstoffzellenanlage durch die Erfindung erheblich vereinfacht.

## Patentansprüche

1. Verfahren zum Betreiben einer Brennstoffzellenanlage (1), die einen Brennstoffzellenblock (4), einen Kühlwasserkreislauf (6) und ein Gehäuse (2), das wärmeabstrahlende Komponenten der Brennstoffzellenanlage (1) umgibt, umfasst, bei dem Luft für den Betrieb der Brennstoffzellen des Brennstoffzellenblocks (4) in das Gehäuse (2) geleitet wird, die Luft die Komponenten umströmt und anschließend von einem Luftverdichter (12) dem Brennstoffzellenblock (4) zugeführt wird, und bei dem der Brennstoffzellenblock (4) durch Kühlwasser des Kühlwasserkreislaufs (6) gekühlt wird und Wärme des Kühlwassers Wasser eines Heizwasserkreislaufs (14) erwärmt.

2. Verfahren nach Anspruch 1, bei dem als Luftverdichter ein Flüssigkeitsringverdichter (12) verwendet wird.

3. Verfahren nach Anspruch 2, bei dem Kühlwasser aus dem Kühlwasserkreislauf (6) in den Flüssigkeitsringverdichter (12) geleitet wird.

4. Verfahren nach Anspruch 3, bei dem die Luft im Flüssigkeitsringverdichter (12) auf in etwa die Temperatur des Kühlwassers erwärmt wird.

5. Brennstoffzellenanlage (1), die einen Brennstoffzellenblock (4), einen Luftverdichter, einen Kühlwasserkreislauf (6), der mit einem Heizwasserkreislauf (14) thermisch verbunden ist, und ein Gehäuse (2), das Wärme abstrahlende Komponenten der Brennstoffzellenanlage (1) umgibt, umfaßt, wobei der Luftverdichter eine Ansaugöffnung (20) aufweist, die sich im Inneren des Gehäuses (2) befindet und durch die Luft aus dem Inneren des Gehäuses (2) in den Luftverdichter einleitbar ist, und wobei das Gehäuse (2) eine Öffnung (16) aufweist, durch die das Gehäuse (2) umgebende Luft in das Innere des Gehäuses (2) einleitbar ist.

6. Brennstoffzellenanlage (1) nach Anspruch 5, bei der das Gehäuse (2) thermisch isoliert ist.

7. Brennstoffzellenanlage (1) nach Anspruch 5 oder 6, bei der das Gehäuse (2) ein doppelwandiges Gehäuse (2) ist.

8. Brennstoffzellenanlage (1) nach einem der Ansprüche 5 bis 7, bei der der Luftverdichter ein Flüssigkeitsringverdichter (12) ist.

9. Brennstoffzellenanlage (1) nach einem der Ansprüch 5 bis 8, bei der der Brennstoffzellenblock (4) PEM-Brennstoffzellen umfaßt.

## Claims

1. Method for operating a fuel cell facility (1), which comprises a fuel cell block (4), a cooling-water circuit (6) and a housing (2), which surrounds heat-radiating components of the fuel cell facility (1), in which method air for operation of the fuel cells of the fuel cell block (4) is passed into the housing (2), the air flows around the components and is then fed to the fuel cell block (4) by an air compressor (12), and in which method the fuel cell block (4) is cooled by cooling water of the cooling-water circuit (6) and heat from the cooling water heats water of a heating-water circuit (14).

2. Method according to Claim 1, in which a liquid ring compressor (12) is used as the air compressor.

3. Method according to Claim 2, in which cooling water is passed out of the cooling-water circuit (6) into the liquid ring compressor (12).

4. Method according to Claim 3, in which the air in the liquid ring compressor (12) is heated to approximately the temperature of the cooling water.

5. Fuel cell facility (1) which comprises a fuel cell block (4), an air compressor, a cooling-water circuit (6), which is thermally connected to a heating-water circuit (14), and a housing (2), which surrounds heat-radiating components of the fuel cell facility (1), the air compressor having a suction opening (20), which is situated in the interior of the housing (2) and can be introduced into the air compressor by the air from the interior of the housing (2), and the housing (2) having an opening (16) through which air which surrounds the housing (2) can be introduced into the interior of the housing (2).

6. Fuel cell facility (1) according to Claim 5, in which the housing (2) is thermally insulated.

7. Fuel cell facility (1) according to Claim 5 or 6, in which the housing (2) is a double-walled housing (2).

8. Fuel cell facility (1) according to one of Claims 5 to 7, in which the air compressor is a liquid ring compressor (12).

9. Fuel cell facility (1) according to one of Claims 5 to 8, in which the fuel cell block (4) comprises PEM fuel cells.

## Revendications

1. Procédé pour faire fonctionner une installation (1) à piles à combustible, qui comprend un bloc (4) de piles à combustible, un circuit (6) d'eau de refroidissement et une enveloppe (2) qui entoure les éléments rayonnant de la chaleur de l'installation (1) à piles à combustible, dans lequel on envoie de l'air dans l'enveloppe pour le fonctionnement des piles à combustible du bloc (4) de piles à combustible (2), on fait passer l'air autour des éléments et ensuite on l'envoie par un compresseur (12) d'air au bloc (4) de piles à combustible, et dans lequel on refroidit le bloc (4) de piles à combustible par de l'eau de refroidissement du circuit (6) d'eau de refroidissement et la chaleur de l'eau de refroidissement réchauffe de l'eau d'un circuit (14) d'eau de chauffage.

2. Procédé suivant la revendication 1, dans lequel on utilise comme compresseur d'air un compresseur (12) d'air à anneau de liquide.

3. Procédé suivant la revendication 2, dans lequel on envoie de l'eau de refroidissement provenant du circuit (6) d'eau de refroidissement au compresseur (12) à anneau de liquide.

4. Procédé suivant la revendication 3, dans lequel on porte l'air dans le compresseur (12) à anneau de liquide à peu près à la température de l'eau de refroidissement.

5. Installation (1) à piles à combustible qui comprend un bloc (4) de piles à combustible, un circuit (6) d'eau de refroidissement et une enveloppe (2) qui entoure les éléments rayonnant de la chaleur de l'installation (1) à piles à combustible, dans laquelle le compresseur d'air a une ouverture (20) d'aspiration qui se trouve à l'intérieur de l'enveloppe (2) et par laquelle de l'air peut être introduit de l'intérieur de l'enveloppe (2) dans le compresseur d'air et dans laquelle l'enveloppe (2) a une ouverture (16) par laquelle l'air entourant l'enveloppe (2) peut être introduit à l'intérieur de l'enveloppe (2).

6. Installation (1) à piles à combustible suivant la revendication 5, dans laquelle l'enveloppe (2) est isolée du point de vue thermique.

7. Installation (1) à piles à combustible suivant la revendication 5 ou 6, dans laquelle l'enveloppe (2) est une enveloppe (2) à double paroi.

8. Installation (1) à piles à combustible suivant l'une des revendications 5 à 7, dans laquelle le compresseur d'air est un compresseur (12) à anneau de liquide.

9. Installation (1) à piles à combustible suivant l'une des revendications 5 à 8, dans laquelle le bloc (4) de piles à combustible comprend des piles à combustible PEM.
